# EUROPÄISCHE PATENTSCHRIFT

(11) **EP 2 208 192 B1**
(45) Veröffentlichungstag und Bekanntmachung des Hinweises auf die Patenterteilung: **01.05.2013**
(21) Anmeldenummer: 08846296.5
(22) Anmeldetag: 06.11.2008
(51) Int. Cl.: G09F 19/22

(54) **PIKTOGRAMM-LEUCHTE**
PICTOGRAM LAMP
APPAREIL D'ÉCLAIRAGE POUR PICTOGRAMME

(30) Priorität: 06.11.2007 DE 202007015389 U
(43) Veröffentlichungstag der Anmeldung: 21.07.2010
(73) Patentinhaber: Zumtobel Lighting GmbH, 6850 Dornbirn (AT)
(72) Erfinder: LOGA, Simona, A-6900 Bregenz (AT); RHOMBERG, Ulrich, A-6850 Dornbirn (AT)
(74) Vertreter: Thun, Clemens
(86) Internationale Anmeldenummer: PCT/EP2008/009381
(87) Internationale Veröffentlichungsnummer: WO 2009/059771

(56) Entgegenhaltungen:
- US-A- 3 402 493
- US-A- 5 950 340
- US-A1- 2002 172 050

## Beschreibung

Die vorliegende Erfindung betrifft eine Befestigungsvorrichtung zur lösbaren Befestigung eines Piktogramm-Leuchtelements an einem Geräteträger, wobei der Geräteträger eine Lichtquelle zur Beleuchtung des Piktogramm-Leuchtelements aufweist. Außerdem betrifft die Erfindung eine Piktogramm-Leuchte mit einer derartigen Befestigungsvorrichtung.

Unter einer "Piktogramm-Leuchte" sei im Rahmen der vorliegenden Beschreibung eine Leuchte verstanden, mit der ein Piktogramm leuchtend dargestellt werden kann. Unter einem "Piktogramm-Leuchtelement" sei eine Baueinheit einer Piktogramm-Leuchte verstanden, die ein Piktogramm leuchtend darstellen kann. Beispielsweise kann ein Piktogramm-Leuchtelement einen plattenförmigen oder auch keilförmigen Lichtleiter aufweisen, der dafür vorgesehen ist, dass durch eine seiner Stirnseiten Licht eingestrahlt bzw. eingekoppelt werden kann und der auf einer Oberfläche ein wenigstens teilweise durchscheinendes Piktogramm aufweist. Als weitere Baueinheit weist eine Piktogramm-Leuchte typischerweise einen Geräteträger auf, der zur Aufnahme der Elektronik sowie insbesondere auch einer Lichtquelle dient.

Piktogramm-Leuchten sind beispielsweise in der Form von Notleuchten oder "Scheibenleuchten" bekannt. Oftmals werden Piktogramm-Leuchten in Gebäuden an Decken montiert, so dass es sich hierbei um spezielle Deckenleuchten handelt.

Beispielsweise ist aus der DE 101 13 240 A1 eine Piktogramm-Leuchte bekannt, bei der der Geräteträger eine Lichtquelle in Form einer Leuchtstoffröhre aufweist, mit der Licht seitlich in den scheibenförmigen Lichtleiter eingestrahlt werden kann.

Im Allgemeinen besteht bei Piktogramm-Leuchten das Bedürfnis, dass mithilfe eines Geräteträgers mehrere unterschiedliche Piktogramme dargestellt werden können dass also ein Piktogramm-Leuchtelement in handhabungsfreundlicher Weise gegen ein anderes Piktogramm-Leuchtelement ausgetauscht werden kann.

Zum Austausch zweier Piktogramm-Leuchtelemente könnte prinzipiell vorgesehen sein, dass das Piktogramm-Leuchtelement seitlich in den Geräteträger hinein- bzw. herausgeschoben wird. Allerdings besteht diese Möglichkeit bei Piktogramm-Leuchten der neueren Generation nicht, da hier als Lichtquellen Leuchtdioden verwendet werden und diese typischerweise in dafür vorgesehene Ausnehmungen an der entsprechenden Stirnseite des Lichtleiters eingreifen, damit das Licht dieser Leuchtdioden möglich effektiv ausgenutzt werden kann. Aufgrund dieser geometrischen Verhältnisse ist ein seitliches Aufschieben des Piktogramm-Leuchtelements auf den Geräteträger nicht realisierbar.

Aus dem deutschen Gebrauchsmuster DE 201 14 561 U1 ist eine Scheibenleuchte mit einem rahmenförmigen Geräteträger bekannt, wobei der Geräteträger mehrere Leuchtdioden zur Beleuchtung eines Piktogramm-Leuchtelements aufweist. Hierbei ist der Geräteträger rahmenartig um das Piktogramm-Leuchtelement ausgebildet; diese Ausbildung kann mit Bezug auf das optische Erscheinungsbild der Leuchte als nachteilig empfunden werden.

Aus der US 3,402,493 ist eine leuchtende Anzeigevorrichtung mit einer kanalförmigen Halterung bekannt, in der von einer Seite eine lichtdurchlässige Scheibe eingeschoben ist. Die Halterung ist ein Profilteil, das an jeder seiner beiden Endbereiche mit einer Endkappe abgedeckt ist.

Aus der US 5,950,340 ist ein Signalgehäuse mit Leuchtdioden bekannt, bei dem ein lichtdurchlässiger Flachkörper an einer als Halterung dienenden Abdeckung mit Schrauben fixiert werden kann.

Der vorliegenden Erfindung liegt die Aufgabe zu Grunde, eine Befestigungsvorrichtung zur lösbaren Befestigung eines Piktogramm-Leuchtelements an einem Geräteträger anzugeben, die eine einfache Möglichkeit zum Auswechseln verschiedener Piktogramm-Leuchtelemente bietet. Insbesondere soll eine werkzeuglose Montage bzw. Demontage eines Piktogramm-Leuchtelements möglich sein. Eine analoge Aufgabe stellt sich für eine entsprechende Piktogramm-Leuchte.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist eine Befestigungsvorrichtung zur lösbaren Befestigung eines Piktogramm-Leuchtelements an einem Geräteträger vorgesehen, wobei der Geräteträger eine Lichtquelle zur Beleuchtung des Piktogramm-Leuchtelements aufweist. Die Befestigungsvorrichtung weist dabei wenigstens ein Riegelelement zur formschlüssigen, verriegelnden Fixierung des Piktogramm-Leuchtelements an dem Geräteträger auf.

Durch das genannte Riegelelement wird eine besonders einfache Möglichkeit gegeben, das Piktogramm-Leuchtelement von dem Geräteträger zu lösen, also zu demontieren bzw. an diesem zu montieren. Insbesondere ist zur Montage bzw. Demontage kein Werkzeug erforderlich. Weiterhin ist es mit der erfindungsgemäßen Befestigungsvorrichtung möglich, das Piktogramm-Leuchtelement durch eine Bewegung auf den Geräteträger aufzusetzen, die entgegen der Hauptrichtung geführt ist, in der das Licht der Lichtquelle in das Piktogramm-Leuchtelement eingekoppelt wird. Im Fall einer Deckenleuchte ist es also möglich, das Piktogramm-Leuchtelement durch eine im Wesentlichen vertikal nach oben gerichtete Bewegung auf den Geräteträger aufzusetzen, also insbesondere ohne seitliches Einschieben.

Das Riegelelement kann in eine verriegelnde und in eine offene Position gebracht werden, wobei sich die Befestigungsvorrichtung in verriegeltem Zustand befindet, wenn sich das Riegelelement in der verriegelnden Position befindet und sich die Befestigungsvorrichtung in geöffnetem Zustand befindet, wenn sich das Riegelelement in offener Position befindet.

Das Riegelelement weist einen Riegelarm auf und die Befestigungsvorrichtung weist weiterhin einen Vorsprung auf, der an dem Piktogramm-Leuchtelement angeordnet ist, derart, dass der Riegelarm im verriegelten Zustand der Befestigungsvorrichtung den Vorsprung hintergreift. Beispielsweise kann vorgesehen sein, dass in verriegeltem Zustand bei vorgesehener Ausrichtung der Befestigungsvorrichtung der Riegelarm den Vorsprung untergreift.

Vorteilhaft weist das Riegelelement ein Federelement auf, das dazu ausgelegt ist, im verriegelten Zustand der Befestigungsvorrichtung durch zwischen dem Federelement und dem Geräteträger wirkende Reibungskraft das Riegelelement in der verriegelnden Position zu halten. Die entsprechende Federkraft kann dabei so ausgelegt sein, dass sie durch manuelle Einwirkung leicht überdrückt werden kann. So ist eine leichte Montage und Demontage bei dennoch sicherer und zuverlässiger Verriegelungsposition ermöglicht.

Bei dem Federelement kann es sich beispielsweise um eine U-förmige Drahtfeder handeln.

Vorteilhaft weist die Befestigungsvorrichtung weiterhin einen in dem Geräteträger angeordneten Kanal auf, in den das Federelement eingreift, wenn sich das Riegelelement in der verriegelnden Position befindet.

Vorteilhaft weist der Geräteträger ein Profilelement, beispielsweise aus Aluminium, auf, wobei das Riegelelement in der verriegelnden Position in einen der beiden Stirnendbereiche des Profilelements eingreift.

Weiterhin vorteilhaft weist die Befestigungsvorrichtung in diesem Fall ein weiteres Riegelelement auf, das in der verriegelnden Position in den anderen Stirnendbereich des Profilelements eingreift. Das weitere Riegelelement kann funktionsgleich zu dem erstgenannten Riegelelement gestaltet sein. Insbesondere kann es baugleich oder spiegelverkehrt baugleich zu dem erstgenannten Riegelelement gestaltet sein.

Vorteilhaft weist die Befestigungsvorrichtung weiterhin einen weiteren Vorsprung auf, der seitlich an dem Geräteträger, nach außen weisend, angeordnet ist, sowie einen dazu korrespondierenden Vorsprung der, nach innen weisend, an dem Piktogramm-Leuchtelement angeordnet ist, derart, dass zur Herstellung der Verbindung des Piktogramm-Leuchtelements mit dem Geräteträger die beiden Vorsprünge in Eingriff gebracht werden können und anschließend durch eine Schwenkbewegung um eine Schwenkachse längs der beiden Vorsprünge das Piktogramm-Leuchtelement in seine vorgesehene Position relativ zu dem Geräteträger gebracht werden kann.

Gemäß einem weiteren Aspekt der Erfindung ist eine Piktogramm-Leuchte vorgesehen, die ein Piktogramm-Leuchtelement, einen Geräteträger mit einer Lichtquelle zur Beleuchtung des Piktogramm-Leuchtelements, und eine erfindungsgemäße Befestigungsvorrichtung aufweist.

Vorteilhaft umfasst dabei die Lichtquelle wenigstens eine Leuchtdiode.

Vorteilhaft weist das Piktogramm-Leuchtelement der Piktogramm-Leuchte einen plattenförmigen oder keilförmigen Lichtleiter auf. Dabei kann das Piktogramm-Leuchtelement weiterhin ein mit dem Lichtleiter verbundenes Basisteil aufweisen. Das Basisteil kann beispielsweise längs einer Stirnseite des Lichtleiters angeordnet vorgesehen sein, insbesondere längs derjenigen Stirnseite, an der das Licht eingekoppelt wird.

Die Erfindung wird im Folgenden anhand eines Ausiuhrungsbeispiets und mit Bezug auf die Zeichnungen näher erläutert. Es zeigen:
- Figur 1: eine perspektivische Skizze einer erfindungsgemäßen Piktogramm-Leuchte mit demontiertem Piktogramm-Leuchtelement,
- Figur 2: eine Skizze wie Fig. 1, jedoch mit montiertem Piktogramm-Leuchtelement,
- Figuren 3a, 3b: zwei Detailskizzen um ein Riegelelement in unterschiedlichen Montagepositionen,
- Figur 4: eine perspektivische Skizze eines Blechteils eines Riegelelements,
- Figuren 5a: eine perspektivische Skizze um einen Stirnendbereich des Profilelements des Geräteträgers, und
- Figur 5b: eine perspektivische Skizze um beide Stirnendbereiche des Profilelements des Geräteträgers, und
- Figuren 6a bis 6e: Skizzen verschiedener Ansichten des Federelements.

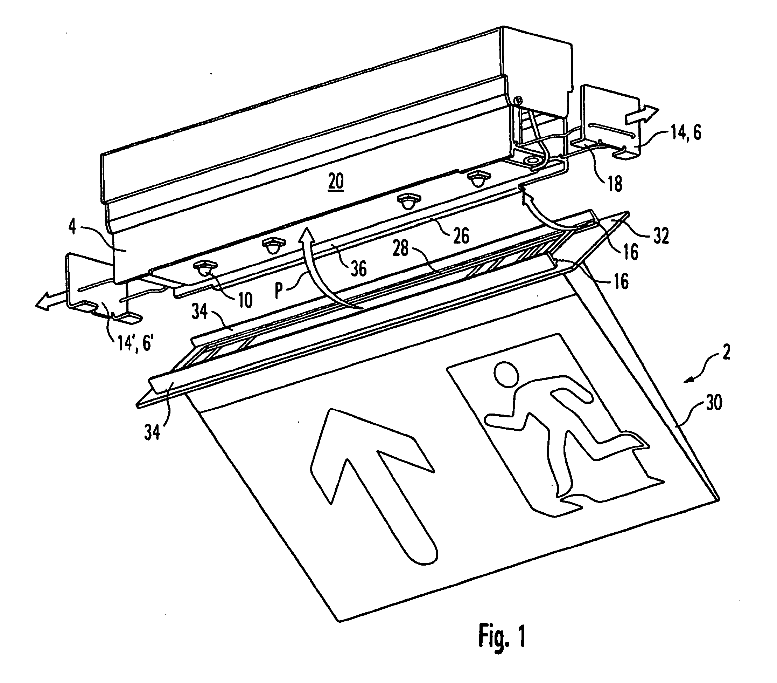

In Figur 1 ist eine Skizze einer erfindungsgemäßen Piktogramm-Leuchte gezeigt, die beim Ausführungsbeispiel als Deckenleuchte ausgebildet ist. Die Piktogramm-Leuchte umfasst einen Geräteträger 4 und ein Piktogramm-Leuchtelement 2, das an dem Geräteträger lösbar befestigt werden kann. Zur Befestigung des Piktogramm-Leuchtelements 2 an dem Geräteträger 4 ist dabei eine erfindungsgemäße Befestigungsvorrichtung vorgesehen.

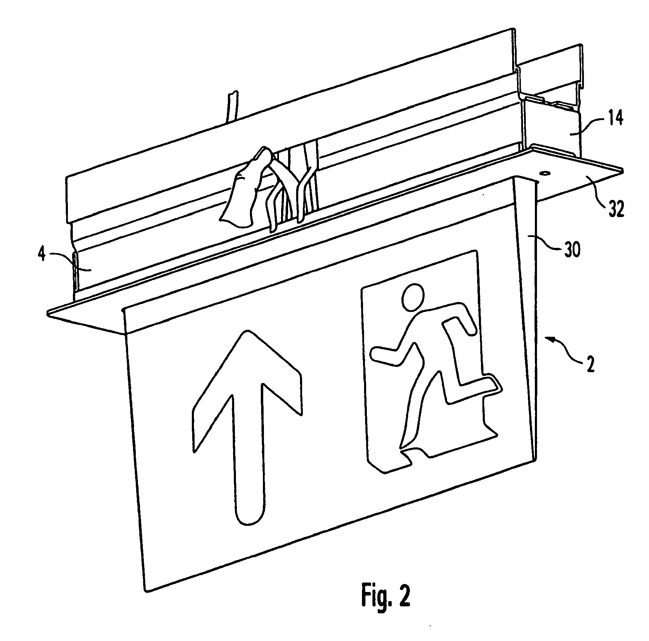

In Fig. 1 ist die Leuchte in dem Zustand gezeigt, in dem das Piktogramm-Leuchtelement 2 nicht an dem Geräteträger 4 montiert ist. In Fig. 2 ist die Leuchte in dem Zustand gezeigt, in dem das Piktogramm-Leuchtelement 2 an dem Geräteträger 4 montiert ist.

Der Geräteträger 4 umfasst beim Ausführungsbeispiel ein Profilteil 20, vorzugsweise aus Aluminium, das an derjenigen Seite des Geräteträgers 4 angeordnet ist, die dem Piktogramm-Leuchtelement 2 zugeordnet ist. Das Profilteil kann beispielsweise auch zweistückig ausgebildet sein, so dass - mit Bezug auf Figur 1 - ein vorderes und ein rückwärtiges Profilteil-Element vorgesehen ist.

Der Geräteträger 4 weist eine Lichtquelle in Form wenigstens einer Leuchtdiode 10 auf, die zur Beleuchtung des Piktogramm-Leuchtelements 2 dient. Das Piktogramm-Leuchtelement 2 umfasst einen keilförmigen Lichtleiter 30, sowie ein Basisteil 32, das mit dem Lichtleiter 30 fest verbunden ist. Das Basisteil 32 kann als flaches Blechteil ausgebildet sein, das eine längliche Ausnehmung zur Aufnahme einer Stirnseite des Lichtleiters 30 aufweist.

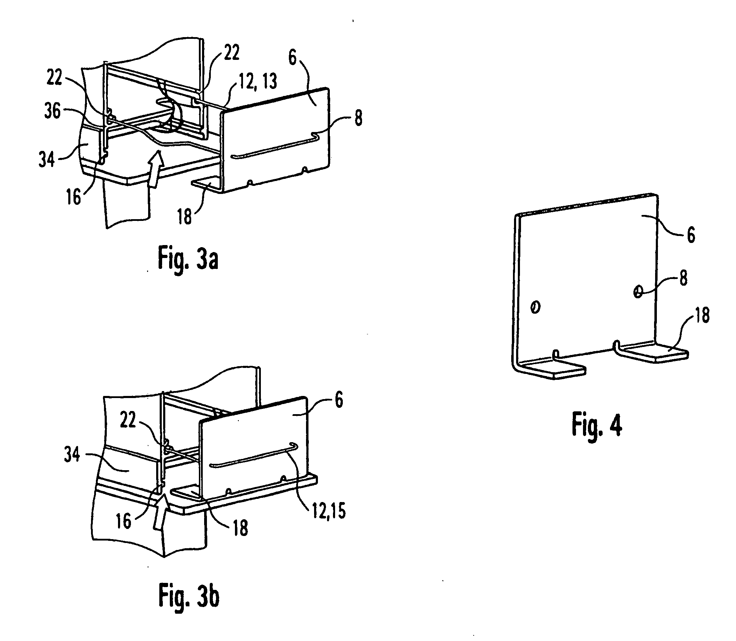

Die Befestigungsvorrichtung umfasst wenigstens ein Riegelelement 14 zur formschlüssigen, verriegelnden Fixierung des Piktogramm-Leuchtelements 2 an dem Geräteträger 4. Wie in den Figuren 3a und 3b zu sehen ist, weist das Riegelelement 14 wenigstens einen Riegelarm 18 auf und das Piktogramm-Leuchtelement 2 einen zu der Befestigungsvorrichtung gehörenden Vorsprung 16.

Beim Ausführungsbeispiel weist das Basisteil 32 des Piktogramm-Leuchtelements 2 zwei nach oben gerichtete Arme 34 auf, die jeweils einander gegenüberliegend zur Innenseite ragende Vorsprünge 16 aufweisen. Der Vorsprung 16 ist beim Ausführungsbeispiel also am Basisteil 32 des Piktogramm-Leuchtelements 2 angeordnet

Im verriegelten Zustand greift der Riegelarm 18 des Riegelelements 14 zumindest teilweise hinter bzw. unter den Vorsprung 16 und wirkt auf diese Weise auf das Piktogramm-Leuchtelement 2 entgegen der Schwerkraft. Die Befestigungsvorrichtung befindet sich in verriegeltem Zustand, wenn sich das Riegelelement 14 in verriegelnder Position befindet.

Beim Ausführungsbeispiel weist das Riegelelement 14 ein Blechteil 6 auf, das unten so abgewinkelt ist, dass zwei Blechlaschen gebildet sind, die die Funktion des genannten Riegelarms 18 erfüllen. In Fig. 4 ist das Blechteil 6 gesondert dargestellt; die beiden Blechlaschen sind deutlich zu erkennen. Beim Ausführungsbeispiel ist vorgesehen, dass das Riegelelement 14 bzw. das Blechteil 6 in der verriegelnden Position so weit in den entsprechende Stirnendbereich des Profilteils 20 eingeschoben ist, dass es als Abschlussplatte des Profilteils 20 angesehen werden kann. Diese Position ist in Fig. 2 dargestellt.

Wie insbesondere aus den Figuren 3a und 3b ersichtlich, weist das Riegelelement 14 ein Federelement 12 auf, das dazu ausgelegt ist, im verriegelten Zustand der Befestigungsvorrichtung durch Reibungskraft, die zwischen dem Federelement 12 und dem Geräteträger 4 wirkt, das Riegelelement 14 in der verriegelnden Position zu halten.

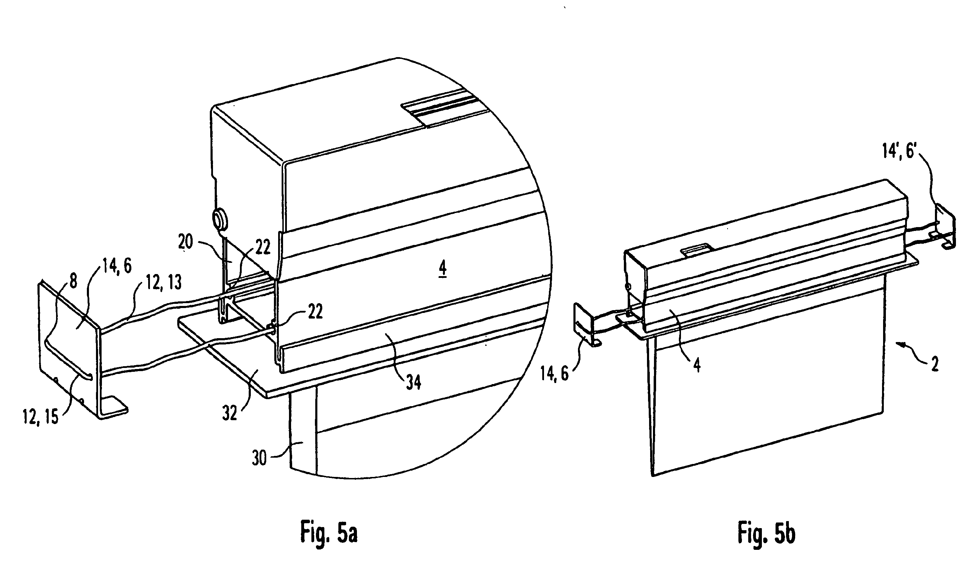

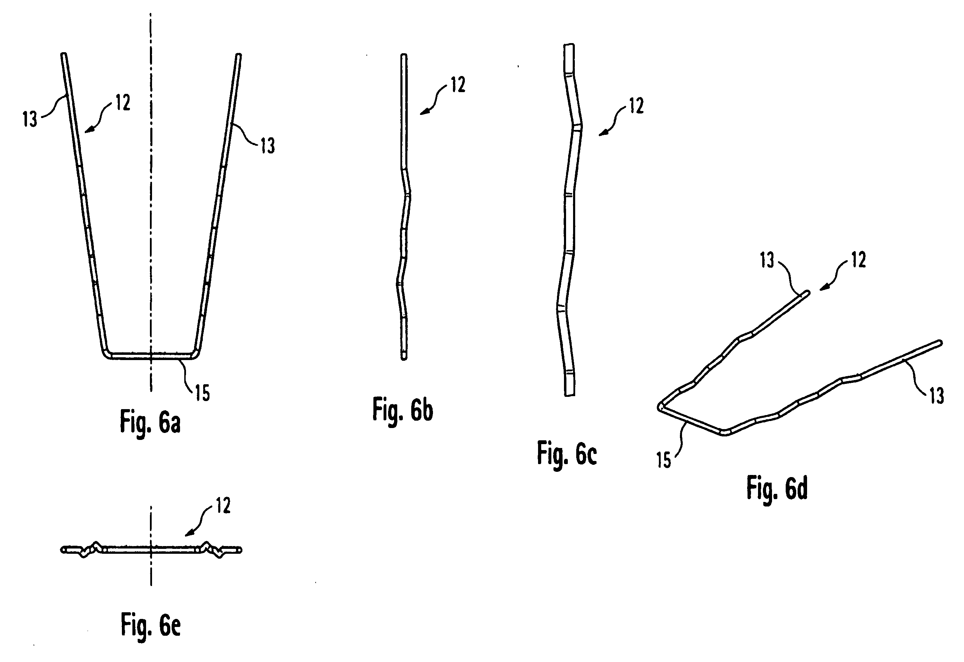

Wie aus den Figuren 6a bis 6e ersichtlich, ist im Ausführungsbeispiel das Federelement 12 als U-förmige Drahtfeder ausgebildet, die zwei Federschenkel 13, sowie einen zwischen diesen liegenden Basisabschnitt 15 aufweist. Wie aus den Figuren 3a und 5a ersichtlich, sind die Federschenkel 13 jeweils durch eine von zwei hierfür vorgesehene Öffnungen 8 des Blechteils 6 hindurch gesteckt.

Wie beispielsweise in Fig. 5a dargestellt, ist in dem Geräteträger 4 wenigstens ein Kanal 22 ausgebildet, in den das Federelement 12 in der verriegelnden Position eingreift.

Beim Ausführungsbeispiel sind zwei derartige Kanäle 22 vorgesehen, wobei für jeden der beiden Schenkel 13 der U-förmigen Drahtfeder bzw. des Federelements 12 jeweils ein Kanal 22 vorgesehen ist.

Bei dem Kanal 22 kann es sich um einen offenen oder geschlossenen Schraubkanal handeln, der rund, rechteckig oder quadratisch sein kann. Der Kanal 22 kann durch eine Längsbohrung in dem Geräteträger 4 bzw. in dem Profilteil 20 gebildet sein. Der Kanal 22 bzw. die Längsbohrung kann auch allgemein als Profilkanal in geeigneter Form ausgebildet sein.

Der Kanal 22 ist derart zur Wechselwirkung mit dem Federelement 12 vorgesehen, dass das Federelement 18 in den Kanal 22 eingreift, wenn sich das Riegelelement 14 in verriegelnder Position befindet. Dabei sind das Federelement 12, insbesondere dessen Federkraft einerseits und der Kanal 22 andererseits so aufeinander abgestimmt, dass das Riegelelement 14 - falls keine äußeren Kräfte wirken - durch Reibungswirkung sicher zwischen dem Federelement 12 und dem Kanal 22 in Position gehalten wird, wenn es sich verriegelnder Position befindet.

Wie beispielsweise aus Fig. 6a ersichtlich, sind beim Ausführungsbeispiel die beiden Federschenkel 13 leicht nach außen abgewinkelt, wodurch die Reibungskraft verstärkt wird. Außerdem sind die beiden Schenkel 13 des Federelements 12 zur Verstärkung der Reibungswirkung gekröpft bzw. weisen leicht abgewinkelte Abschnitte auf, wie am besten aus den Figuren 6b, 6c, 6d und 6e ersichtlich.

Beim Ausführungsbeispiel fungiert das Federelement 12 außerdem als Fixierelement, das das Riegelelement 14 mit Bezug auf den Geräteträger 4 in der verriegelnden Position lagefixiert. Dies wird beim Ausführungsbeispiel dadurch erreicht, dass die Federschenkel 13 in dieselbe Richtung von dem Blechteil 6 abstehen, wie der Riegelarm 18. Dies ist insbesondere in Figur 3b erkennbar. Die Federschenkel 13 wirken also auch als Haltearme zur Fixierung des Riegelelements 14 am Geräteträger 4, wenn sich das Riegelelement 14 in verriegelnder Position befindet.

Wie am besten aus Figur 1 ersichtlich, weist das Aluminiumprofil 20 zwei in Längsrichtung verlaufende, nach unten vorstehende Arme 36 auf, wobei an einem dieser Arme 36 - mit Bezug auf Fig. 1 an dem rückwärtigen Arm 36 - ein kleiner, in Längsrichtung des Profilteils 20 verlaufender Vorsprung 26 angeordnet ist, der nach außen ragend ausgebildet ist. Das Basisteil 32 des Piktogramm-Leuchtelements 2 weist einen dazu korrespondierenden, nach innen ragenden Vorsprung 28 auf. Die beiden genannten Vorsprünge 26, 28 sind derart ausgebildet, dass zur Montage des Piktogramm-Leuchtelements 2 der nach innen ragende Vorsprung 28 des Basisteils 32 an den Vorsprung 26 des Profilteils 20 angelegt werden kann und durch eine anschließende Schwenkbewegung im Sinne des in Figur 1 dargestellten Pfeils P in die vorgesehene Montageposition gebracht werden kann. Anschließend kann das Riegelelement 14, wie oben dargelegt, von der Seite in einen Stirnendbereich des Profilteils 20 eingeschoben werden, bis die genannte Verriegelung hergestellt ist und durch das Federelement 12 gesichert ist.

Der Vorsprung 28 des Basisteils 32 kann in herstellungstechnisch vorteilhafter Weise in Verlängerung des Vorsprungs 16 des Basisteils 32 ausgebildet sein, so wie aus Fig. 1 ersichtlich.

Wie aus Fig. 5b ersichtlich, sind beim Ausführungsbeispiel zwei Riegelelemente 14, 14' mit zwei entsprechenden Blechteilen 6, 6' vorgesehen, wobei je ein Riegelelement 14, 14' an jeweils einem der beiden Stirnendbereiche des Aluminiumprofilteils 20 zur Verriegelung dient.

Zur Montage kann also vorgesehen sein, dass das Piktogramm-Leuchtelement 2 zunächst - wie in Fig. 1 skizziert - etwa in einem 45° Winkel zu dem Geräteträger 4 bzw. zu dem Profilteil 20 derart an dem Geräteträger 4 angesetzt werden, dass der nach außen ragende Vorsprung 26 des Geräteträgers 4 den nach innen ragenden Vorsprung 28 des Piktogramm-Leuchtelements 2 hintergreift. Auf diese Weise wird das Piktogramm-Leuchtelement 2 an dem Geräteträger 4 "eingehängt". Anschließend wird es verschwenkt, und zwar um eine Schwenkachse, die längs der beiden korrespondierenden Vorsprünge 26, 28 verläuft, bis es sich in der vorgesehenen Stellung bezüglich des Geräteträgers 4 befindet. Anschließend können die beiden Riegelelemente 14, 14' in die beiden Stirnendbereiche des Profilteils 20 eingeschoben werden, bis sie sich in der verriegelnden Position befinden.

Durch den genannten Mechanismus ist ein unbeabsichtigtes Lösen des Piktogramm-Leuchtelements 2 von dem Geräteträger 4 praktisch ausgeschlossen.

### Bezugszeichenliste

| | |
|---|---|
| 2 | Piktogramm-Leuchtelement |
| 4 | Geräteträger |
| 6 | Blechteil |
| 6' | weiteres Blechteil |
| 8 | Öffnungen des Blechteils für das Federelement |
| 10 | Lichtquelle, z.B. Leuchtdiode |
| 12 | Federelement |
| 13 | Federschenkel |
| 14 | Riegelelement |
| 14' | weiteres Riegelelement |
| 15 | Basisabschnitt des Federelements |
| 16 | Vorsprung am Geräteträger |
| 18 | Riegelarm, z.B. Lasche |
| 20 | Profilteil, z.B. aus Aluminium |
| 22 | Kanal im Geräteträger |
| 26 | länglicher Vorsprung am Geräteträger |
| 28 | länglicher Vorsprung am Piktogramm-Leuchtelement |
| 30 | Lichtleiter |
| 32 | Basisteil des Piktogramm-Leuchtelements |
| 34 | Arme des Basisteils |
| 36 | Arme des Geräteträger |

## Patentansprüche

1. Befestigungsvorrichtung zur lösbaren Befestigung eines Piktogramm-Leuchtelements (2) an einem Geräteträger (4),
wobei der Geräteträger (4) eine Lichtquelle (10) zur Beleuchtung des Piktogramm-Leuchtelements (2) aufweist und
wobei die Befestigungsvorrichtung wenigstens ein Riegelelement (14) zur formschlüssigen, verriegelnden Fixierung des Piktogramm-Leuchtelements (2) an dem Geräteträger (4) aufweist,
**dadurch gekennzeichnet,**
**dass** das Riegelelement (14) einen Riegelarm (18) aufweist,
und weiterhin ein an dem Piktogramm-Leuchtelement (2) angeordneter Vorsprung (16) vorgesehen ist, derart, dass
der Riegelarm (18) im verriegelten Zustand der Befestigungsvorrichtung den Vorsprung (16) hintergreift.

2. Befestigungsvorrichtung nach Anspruch 1,
bei der das Riegelelement (14) ein Federelement (12) aufweist, das dazu ausgelegt ist, in verriegeltem Zustand der Befestigungsvorrichtung durch zwischen dem Federelement (12) und dem Geräteträger (4) wirkende Reibungskraft das Riegelelement (14) in der verriegelnden Position zu halten.

3. Befestigungsvorrichtung nach Anspruch 2,
bei der das Federelement (12) eine U-förmige Drahtfeder ist.

4. Befestigungsvorrichtung nach Anspruch 2 oder 3,
weiterhin aufweisend einen in dem Geräteträger (4) angeordneten Kanal (22), in den das Federelement (12) eingreift, wenn sich das Riegelelement (14) in der verriegelnden Position befindet.

5. Befestigungsvorrichtung nach einem der vorhergehenden Ansprüche,
bei der der Geräteträger (4) ein Profilelement (20), vorzugsweise aus Aluminium, aufweist, wobei das Riegelelement (14) in der verriegelnden
Position in einen der beiden Stirnendbereiche des Profilelements (20) eingreift.

6. Befestigungsvorrichtung nach Anspruch 5,
bei der außerdem ein weiteres Riegelelement (14') vorgesehen ist, das in der verriegelnden Position in den anderen Stirnendbereich des Profilelements (20) eingreift.

7. Befestigungsvorrichtung nach einem der vorhergehenden Ansprüche, weiterhin aufweisend einen weiteren Vorsprung (26) der seitlich an dem Geräteträger (4), nach außen weisend, angeordnet ist und einen dazu korrespondierenden Vorsprung (28) der, nach innen weisend, an dem Piktogramm-Leuchtelement (2) angeordnet ist, derart, dass zur Herstellung der Verbindung des Piktogramm-Leuchtelements (2) mit dem Geräteträger (4) die beiden vorsprünge (26, 28) in Eingriff gebracht werden können und anschließend durch eine Schwenkbewegung um eine Schwenkachse längs der beiden Vorsprünge (26, 28) das Piktogramm-Leuchtelement (2) in seine vorgesehene Position relativ zu dem Geräteträger (4) gebracht werden kann.

8. Piktogramm-Leuchte,
aufweisend
ein Piktogramm-Leuchtelement (2),
einen Geräteträger (4) mit einer Lichtquelle (10) zur Beleuchtung des Piktogramm-Leuchtelements, und
eine Befestigungsvorrichtung nach einem der vorhergehenden Ansprüche.

9. Piktogramm-Leuchte nach Anspruch 8,
bei der die Lichtquelle wenigstens eine Leuchtdiode (10) umfasst.

10. Piktogramm-Leuchte nach Anspruch 8 oder 9,
bei der das Piktogramm-Leuchtelement (2) einen plattenförmigen oder keilförmigen Lichtleiter (30) aufweist.

11. Piktogramm-Leuchte nach einem der Ansprüche 8 bis 10,
bei der das Piktogramm-Leuchtelement (2) ein mit dem Lichtleiter (30) verbundenes Basisteil (32) aufweist.

## Claims

1. A fastening arrangement for releasable fastening of a pictogram lighting element (2) to a device carrier (4),
wherein the device carrier (4) has a light source (10) for the illumination of the pictogram lighting element (2), and
wherein the fastening arrangement has at least one locking element (14) for the form-closing, locking fixation of the pictogram lighting element (2) on the device carrier (4),
**characterised in that**
the locking element (14) has a locking arm (18),
and, furthermore, a projection (16) which is arranged on the pictogram lighting element (2) is provided,
in such a way that
the locking arm (18) engages behind the projection (16) in the locked state of the fastening arrangement.

2. A fastening arrangement according to claim 1,
in which the locking element (14) has a spring element (12) that is designed to hold the locking element (14) in the locking position in the locked state of the fastening arrangement by means of frictional force acting between the spring element (12) and the device carrier (4).

3. A fastening arrangement according to claim 2,
in which the spring element (12) is a U-shaped wire spring.

4. A fastening arrangement according to claim 2 or 3,
having, furthermore, a channel (22) that is arranged in the device carrier (4) and into which the spring element (12) engages when the locking element (14) is in the locking position.

5. A fastening arrangement according to one of the preceding claims, in which the device carrier (4) has a profiled element (20), preferably made from aluminium, wherein in the locking position the locking element (14) engages into one of the two end regions of the profiled element (20).

6. A fastening arrangement according to claim 5,
in which, moreover, a further locking element (14') is provided that engages into the other end region of the profiled element (20) in the locking position.

7. A fastening arrangement according to one of the preceding claims, having, furthermore, a further projection (26) arranged laterally on the device carrier (4), pointing outwards, and a projection (28) corresponding thereto that is arranged, pointing inwards, on the pictogram lighting element (2), in such a way that in order to establish the connection of the pictogram lighting element (2) with the device carrier (4) the two projections (26, 28) can be brought into engagement and subsequently by means of a swivelling movement about a swivel axis along the two projections (26, 28) the pictogram lighting element (2) can be brought into its intended position relatively to the device carrier (4).

8. A pictogram luminaire,
having
a pictogram lighting element (2),
a device carrier (4) having a light source (10) for the illumination of the pictogram lighting element, and
a fastening arrangement according to one of the preceding claims.

9. A pictogram luminaire according to claim 8,
in which the light source comprises at least one light-emitting diode (10).

10. A pictogram luminaire according to claim 8 or 9,
in which the pictogram lighting element (2) has a plate-shaped or wedge-shaped light guide (30).

11. A pictogram luminaire according to one of claims 8 to 10,
in which the pictogram lighting element (2) has a base portion (32) that is connected to the light guide (30).

## Revendications

1. Dispositif de fixation servant à fixer de manière amovible un élément d'éclairage pour pictogramme (2) au niveau d'un support d'appareil (4),
sachant que le support d'appareil (4) présente une source de lumière (10) servant à éclairer l'élément d'éclairage pour pictogramme (2), et
sachant que le dispositif de fixation présente au moins un élément de verrouillage (14) servant à fixer par verrouillage et par complémentarité de forme l'élément d'éclairage pour pictogramme (2) au niveau du support (4) d'appareil,
**caractérisé en ce**
**que** l'élément de verrouillage (14) présente un bras de verrouillage (18),
et en ce qu'en outre une partie faisant saillie (16) disposée au niveau de l'élément d'éclairage pour pictogramme (2) est prévue de telle manière que
le bras de verrouillage (18) vient en prise par l'arrière avec la partie faisant saillie (16) lorsque le dispositif de fixation se trouve dans l'état verrouillé.

2. Dispositif de fixation selon la revendication 1,
dans le cadre duquel l'élément de verrouillage (14) présente un élément d'amortissement (12), qui est configuré pour maintenir dans la position de verrouillage l'élément de verrouillage (14) par une force de friction agissant entre l'élément d'amortissement (12) et le support de l'appareil (4) lorsque le dispositif de fixation est verrouillé.

3. Dispositif de fixation selon la revendication 2,
dans le cadre duquel l'élément d'amortissement (12) est un ressort à boudin en forme de U.

4. Dispositif de fixation selon la revendication 2 ou 3,
présentant en outre un canal (22) disposé dans le support d'appareil (4), avec lequel l'élément d'amortissement (12) vient en prise, lorsque l'élément de verrouillage (14) se trouve dans la position de verrouillage.

5. Dispositif de fixation selon l'une quelconque des revendications précédentes,
dans le cadre duquel le support d'appareil (4) présente un élément profilé (20), de préférence en aluminium, sachant que l'élément de verrouillage (14) vient en prise dans la position de verrouillage avec une des deux zones d'extrémité frontale de l'élément profilé (20).

6. Dispositif de fixation selon la revendication 5,
dans le cadre duquel en outre un élément de verrouillage supplémentaire (14') est prévu, lequel vient en prise dans la position de verrouillage avec l'autre zone d'extrémité frontale de l'élément profilé (20).

7. Dispositif de fixation selon l'une quelconque des revendications précédentes,
présentant en outre une autre partie faisant saillie (26) disposée sur le côté du support de l'appareil (4) de manière orientée vers l'extérieur et une partie faisant saillie (28) correspondant à cette dernière et disposée au niveau de l'élément d'éclairage pour pictogramme (2) de manière orientée vers l'intérieur de telle manière que les deux parties faisant saillie (26, 28) peuvent être amenées en prise afin d'établir une liaison entre l'élément d'éclairage pour pictogramme (2) et le support d'appareil (4) et que l'élément d'éclairage pour pictogramme (2) peut être amené dans sa position prévue par rapport au support d'appareil (4) par un mouvement de pivotement autour d'un axe de pivotement le long des deux parties faisant saillie (26, 28).

8. Dispositif d'éclairage pour pictogramme,
présentant
un élément d'éclairage pour pictogramme (2),
un support d'appareil (4) doté d'une source de lumière (10) aux fins de l'éclairage de l'élément d'éclairage pour pictogramme, et
un dispositif de fixation selon l'une quelconque des revendications précédentes.

9. Dispositif d'éclairage pour pictogramme selon la revendication 8,
dans le cadre duquel la source de lumière comprend au moins une diode électroluminescente (10).

10. Dispositif d'éclairage pour pictogramme selon la revendication 8 ou 9,
dans le cadre duquel l'élément d'éclairage pour pictogramme (2) présente un guide de lumière par fibres optiques (30) en forme de plaque ou en forme de cône.

11. Dispositif d'éclairage pour pictogramme selon l'une quelconque des revendications 8 à 10,
dans le cadre duquel l'élément d'éclairage pour pictogramme (2) présente une partie de base (32) reliée au guide de lumière par fibres optiques (30).
